# EUROPÄISCHE PATENTSCHRIFT

(11) **EP 3 052 540 B1**
(45) Veröffentlichungstag und Bekanntmachung des Hinweises auf die Patenterteilung: **15.11.2017**
(21) Anmeldenummer: 14780823.2
(22) Anmeldetag: 30.09.2014
(51) Int. Cl.: C08G 59/40, C08L 63/00

(54) **MEHRKOMPONENTEN-EPOXIDHARZZUSAMMENSETZUNG**
MULTI-COMPONENT EPOXY RESIN COMPOSITION
COMPOSITION DE RÉSINE ÉPOXYDE À PLUSIEURS COMPOSANTS

(30) Priorität: 01.10.2013 EP 13186860
(43) Veröffentlichungstag der Anmeldung: 10.08.2016
(73) Patentinhaber: BASF SE, 67056 Ludwigshafen am Rhein (DE)
(72) Erfinder: KLOPSCH, Rainer, 67551 Worms (DE); CHARRAK, Monika, 67240 Bobenheim-Roxheim (DE); ZWECKER, Joachim, 69469 Weinheim (DE)
(86) Internationale Anmeldenummer: PCT/EP2014/070917
(87) Internationale Veröffentlichungsnummer: WO 2015/049229

(56) Entgegenhaltungen:
- WO-A1-2011/157671

## Beschreibung

Die vorliegende Erfindung betrifft neue Mehrkomponenten-Epoxidharzzusammensetzungen, umfassend wenigstens eine Epoxidharzkomponente und wenigstens eine Härterkomponente, die für Injektionsmörtelsysteme, insbesondere für chemische Befestigungs- bzw. Verankerungsysteme, geeignet sind.

Bei der chemischen Befestigungs- bzw. Verankerungstechnik werden härtbare Massen, sogenannte Injektionsmörtelysteme, zusammen mit einem Verankerungselement, beispielsweise einem Metallstift, einer Metallstange oder Metallhaken in eine in einem mineralischen Substrat, beispielsweise Stein oder Beton, befindliche Aussparung, z.B. ein Bohrloch, eingesetzt. Beim Aushärten des Injektionsmörtels entsteht ein fester Verbund des Verankerungselements mit dem Substrat. Hierbei haben sich im Wesentlichen zwei Anwendungsarten durchgesetzt. Als Patronensystem, bei dem sich die miteinander reagierenden Komponenten in getrennten Kammern, die entweder aus Glas oder aus Kunststoffbeuteln bestehen, befinden. Die Patronen werden in ein Bohrloch eingesetzt und die Komponenten durch schlagdrehendes Eintreiben eines Verankerungselements gemischt, wodurch die Härtungsreaktion zwischen den Komponenten initiiert wird. Daneben haben sich Injektionssysteme durchgesetzt, bei denen die Komponenten in getrennte Folienbeutel gefüllt werden. Mit Hilfe eines Dispensers werden die Komponenten dann kurz vor der Anwendung gemischt, in ein Bohrloch eingebracht und das Verankerungsmittel in die mit den Komponenten der Zusammensetzung gefüllte Aussparung, z.B. ein Bohrloch, gesteckt.

Die für Injektionsmörtelsysteme eingesetzten härtbaren Massen enthalten typischerweise ein organisches Bindemittel, das bei der Anwendung unter Vernetzung aushärtet. Hierfür werden ungesättigte Polyesterharze (UP-Harze), Vinylharze sowie Epoxidharze, insbesondere Mehrkomponenten-Epoxidharzzusammensetzungen vorgeschlagen.

Grundsätzlich müssen härtbare Massen für die chemische Befestigung ein komplexes Anforderungsprofil erfüllen, das im Wesentlichen durch die Eigenschaften des verwendeten Bindemittels bestimmt wird. Zum einen muss die Endfestigkeit des Verbunds aus härtbarer Masse und Verankerungselement hoch sein. Gleichzeitig ist ein großes Temperaturfenster für die Verarbeitbarkeit wichtig, d.h. einerseits müssen die Bindemittel bei niedrigen Temperaturen von unterhalb 5°C hinreichend rasch und vollständig aushärten, um gute Früh- und hohe Endfestigkeiten auch bei niedrigen Verarbeitungstemperaturen zu erzielen. Andererseits darf die Reaktivität des Bindemittelsystems nicht zu hoch sein, um auch bei höheren Verarbeitungstemperaturen (z.B. im Bereich von 30 bis 50°C) ein ausreichend langes Verarbeitungszeitfenster zu haben, innerhalb dessen eine Korrektur der Position des Verankerungselements noch möglich ist. Außerdem ist eine hohe Wärmestandfestigkeit gewünscht. Weiterhin muss bei Mehrkomponenten-Zusammensetzungen die Viskosität der Komponenten hinreichend niedrig sein, um eine gute Durchmischung der Bestandteile bei der Verarbeitung zu gewährleisten. Diese komplexen Eigenschaftsprofile erfordern teilweise gegensätzliche Bindemitteleigenschaften, so dass nicht immer alle gewünschten Eigenschaften in gleicher Weise verwirklicht werden können.

Die WO 2005/090433 beschreibt beispielsweise Mehrkomponenten-Epoxidharzmassen für Befestigungszwecke, die eine Epoxidharzkomponente (a), die härtbare Epoxide beinhaltet, und eine Härterkomponente (b) umfasst, wobei die Härterkompnente eine Mannichbasenformulierung umfasst.

Die DE 102011006286 beschreibt ein Hybridbindemittel für die chemische Befestigung, die ein organisches Bindemittel auf Epoxidharzbasis und ein anorganisches Bindemittel enthält, wobei das organische Bindemittel einen Härter auf Wasserbasis enthält. Das Wasser kann jedoch zu Kompatibilitätsproblemen führen.

Aus der WO 2011/157617 sind Epoxidharzformulierungen bekannt, die neben dem Epoxidharz und einem aminischen Härter eine Verbindung der allgemeinen Formel I enthalten: 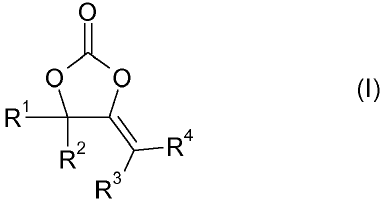 worin
R¹ und R² unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R¹ und R² gemeinsam für eine C₃-C₁₁-Alkylengruppe stehen; und R³ und R⁴ unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R³ und R⁴ gemeinsam für eine C₄-C₆-Alkylengruppe stehen. Zwar härten diese Formulierungen auch bei niedrigen Verarbeitungstemperaturen rasch aus, jedoch sind beim Einsatz derartiger Formulierungen in chemischen Befestigungssystemen nur mäßige Endfestigkeiten erreichbar.

Aufgabe der vorliegenden Erfindung ist daher, Mehrkomponenten-Epoxidharzzusammensetzungen zur Verfügung zu stellen, die für chemische Befestigung geeignet sind und die gegenüber den bisher bekannten Mehrkomponenten-Epoxidharzzusammensetzungen vorteilhafte Eigenschaften, insbesondere im Hinblick auf eine Anwendung in chemischen Befestigungssystemen aufweisen. Die Massen sollten sich insbesondere auch bei tieferen Temperaturen noch verarbeiten lassen und auch bei höheren Temperaturen ein ausreichendes Verarbeitungszeitfenster aufweisen. Vor allem sollten hohe Endfestigkeit erzielt werden, auch wenn die Massen bei niedrigen Temperaturen verarbeitet werden. Weiterhin sollten diese eine hohe Wärmestandfestigkeit aufweisen, um eine hinreichend hohe Festigkeit des Verbunds auch bei höheren Temperaturen, wie sie beispielsweise an Gebäudeflächen bei Sonneneinstrahlung auftreten können, zu gewährleisten.

Diese und weitere Aufgaben werden durch die im Folgenden beschriebenen Mehrkomponenten-Epoxidharzzusammensetzungen gelöst. Die Erfindung betrifft daher Mehrkomponenten-Epoxidharzzusammensetzungen, welche die Folgenden Komponenten umfassen:
a) wenigstens eine Epoxidharzkomponente, die
   a1) wenigstens ein Epoxidharz und
   a2) wenigstens eine Verbindung der allgemeinen Formel I enthält, 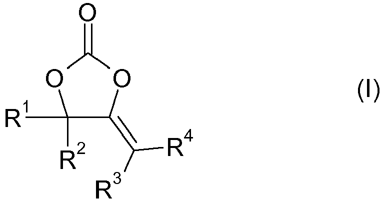 worin
      R¹ und R² unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R¹ und R² gemeinsam für eine C₃-C₁₁-Alkylengruppe stehen;
      R³ und R⁴ unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R³ und R⁴ gemeinsam für eine C₄-C₆-Alkylengruppe stehen;
b) wenigstens eine Härterkomponente, die
   b1) wenigstens einen Aminhärter enthält,
      wobei die Epoxidharzkomponente (a) und/oder die Härterkomponente (b) wenigstens einen weiteren Bestandteil c1) enthalten, der unter aliphatischen Polyetherpolyolen und aliphatischen Polyetheraminpolyolen ausgewählt ist.

Die erfindungsgemäßen Mehrkomponenten-Epoxidharzzusammensetzungen besitzen eine Reihe von Vorteilen. Bei Verwendung der Zusammensetzungen für die chemische Befestigung lassen sich hohe Endfestigkeiten und hohe Zugfestigkeiten erreichen. Die Zusammensetzungen können auch bei tieferen Temperaturen noch verarbeiten werden und härten hinreichend rasch und vollständig aus, ohne dass Einbußen bei der Festigkeit des Verbunds auftreten. Die Zusammensetzungen haben nach dem Vermischen von Epoxidharzkomponente und Härterkomponente und auch bei höheren Temperaturen ein ausreichend langes Verarbeitungszeitfenster. Weiterhin weisen die Verbunde eine hohe Wärmestandfestigkeit auf. Die Viskosität kann auf einen für die Anwendung in chemischen Befestigungen gewünschten Bereich eingestellt werden, ohne dass Qualitätseinbußen des Verbunds auftreten.

Die erfindungsgemäßen Mehrkomponenten-Epoxidharzzusammensetzungen umfassen wenigstens eine Epoxidharzkomponente (a) und wenigstens eine Härterkomponente (b), die in der Regel separat formuliert sind und erst bei oder kurz vor der Anwendung miteinander vermischt werden, sowie die Komponente c1). Vorzugsweise ist die Hauptmenge der Komponente c1) in der Härterkomponente formuliert. Allerdings kann die Kompenente c1) teilweise oder vollständig auch in der EpoxidharzKomponente (a) formuliert sein. Vorzugsweise sind wenigstens 50 Gew.-%, insbesondere wenigstens 80 Gew.-% oder die Gesamtmenge der Komponente c1) in der Härterkomponente (b) formuliert. Die Gesamtmenge an Komponente c1) liegt typischerweise im Bereich von 0,5 bis 20 Gew.-%, insbesondere im bereich von 1 bis 15 Gew.-%, speziell im Bereich von 2 bis 10 Gew.-%, bezogen auf das Gesamtgewicht der Komponenten (a) und (b).

In einer ersten Ausführungsform der Erfindung handelt es sich bei der Komponente c1) um wenigstens ein Polyetherpolyol, beispielsweise ein Poly-C₂-C₄-alkylenglykol wie Polyethylenglykol, Polypropylenglykol, Poly(ethylenglykol-co-propylenglykol)-Copolymere und Polytetrahydrofuran (PTHF). Geeignetes Poly-C₂-C₄-alkylenglykole weisen vorzugsweise ein zahlenmittleres Molekulargewicht im Bereich von 400 bis 50000 Dalton und insbesondere im Bereich von 500 bis 20000 Dalton auf. Geeignete Poly-C₂-C₄-alkylenglykole weisen in der Regel terminale Hydroxylgruppen auf. Vorzugsweise weisen die Poly-C₂-C₄-alkylenglykole eine Hydroxylzahl im Bereich von 2 bis 200 mg KOH/g auf.

In dieser ersten Ausführungsform umfasst die Komponente c1) vorzugsweise Polytetrahydrofuran (PTHF). Hierunter versteht man lineare oder verzweigte Polytetramethylenether bzw. Poly-1,4-butylenether. PTHF wird in der Regel durch kationische Polymerisation von Tetrahydrofuran oder durch Polykondensation von Butandiol hergestellt. PTHF und Verfahren zu seiner Herstellung sind bekannt, z.B. aus US 4658065, WO 96/09335, DE 19758296 und WO 2003/018666. Geeignetes PTHF weist vorzugsweise ein zahlenmittleres Molekulargewicht im Bereich von 400 bis 50000 Dalton und insbesondere im Bereich von 500 bis 20000 Dalton auf. Das PTHF weist vorzugsweise eine Hydroxylzahl im Bereich von 2 bis 200 mg KOH/g auf. Geeignet sind vor allem die unter der Bezeichnung PolyTHF® von der BASF SE vertriebenen Produkte.

In einer zweiten, bevorzugten Ausführungsform handelt es sich bei der Komponente c1) um wenigstens ein aliphatisches Polyetheraminpolyol, insbesondere ein verzweigtes Poly-C₂-C₄-alkylenetheraminpolyol oder um ein Gemisch davon mit einem Poly-C₂-C₄-alkylenglykol, insbesondere mit PTHF. Vorzugsweise ist das aliphatische Polyetheraminpolyol Hauptbestandteil der Komponente c1) und macht insbesondere wenigstens 80 Gew.-% der Komponente c1) aus. Bevorzugt ist das aliphatische Polyetheraminpolyol alleiniger Bestandteil der Komponente c1). Vorzugsweise ist das aliphatische Polyetheraminpolyol unter verzweigten Poly-C₂-C₄-alkylenetheraminpolyolen ausgewählt.

Unter Polyetheraminpolyolen versteht man aliphatische Polyetheramine mit terminalen Hydroxylgruppen. Polyetheraminpolyole werden in der Regel durch Kondensation von Di- und/oder Trialkanolaminen, insbesondere durch Kondensation von Di- und/oder Tri-C₂-C₄-alkanolaminen hergestellt. Erfolgt die Herstellung ausgehend von Trialkanolaminen oder Gemischen von Trialkanolaminen mit Dialkanolaminenen, z.B. ausgehend von Tri-C₂-C₄-alkanolaminen oder deren Gemischen mit Di-C₂-C₄-alkanolaminen, erhält man verzweigte Polyetheraminpolyole, bzw. verzweigte Poly-C₂-C₄-alkylenetheraminpolyole. Aliphatische Polyetheraminpolyole, insbesondere verzweigte Poly-C₂-C₄-alkylenetheraminpolyole sind bekannt, z.B. aus US 2,178,173, US 2,290,415, US 2,407,895, DE 4003243 und WO 2009/047269.

Bevorzugt sind die in WO 2009/047269 beschriebenen, verzweigten Polyetheraminpolyole, insbesondere die dort beschriebenen verzweigten Poly-C₂-C₄-alkylenetheraminpolyole. Bevorzugte Ausgangsmaterialien zur Herstellung der bevorzugten, verzweigten Poly-C₂-C₄-alkylenetheraminpolyole sind Tri-C₂-C₄-alkanolamine wie Triethanolamin, Tripropanolamin, Triisopropanolamin oder Tributanolamin, die gegebenenfalls in Kombination mit Dialkanolaminen, wie Diethanolamin, Dipropanolamin, Diisopropanolamin, Dibutanolamin, N,N'- Dihydroxyalkyl-piperidin (Alkyl = C₁-C₈), oder in Kombination mit Polyetherdiolen oder höherfunktionellen Polyetherolen auf Basis von Ethylenoxid und/oder Propylenoxid umgesetzt werden. Besonders bevorzugte, verzweigte Poly-C₂-C₄-alkylenetheraminpolyole sind solche, die durch Kondensation von wenigstens einem Tri-C₂-C₄-alkanolamin und insbesondere durch Kondensation von wenigstens einem unter Triethanolamin, Tripropanolamin, Triisopropanolamin oder deren Gemischen ausgewählten Tri-C₂-C₄-alkanolamin erhältlich sind.

Die OH-Zahl der Polyetheraminpolyole, insbesondere die bevorzugten verzweigten Poly-C₂-C₄-alkylenetheraminpolyole, beträgt meist wenigstens 100 mg KOH/g oder mehr, bevorzugt wenigstens 150 mg KOH/g oder mehr und liegt insbesondere im Bereich von 150 bis 700 mg KOH/g. Die Polyetheraminpolyole, insbesondere die bevorzugten verzweigten Poly-C₂-C₄-alkylenetheraminpolyole, weisen in der Regel ein zahlenmittleres Molgewicht Mₙ im Bereich von 1000 und 50000, und bevorzugt im Bereich von 1500 und 20.000 g/mol auf. Das gewichtsmittlere Molgewicht Mw liegt zumeist im Bereich von 1200 und 300000, bevorzugt von 2000 bis 200000 und insbesondere von 3000 bis 150000 g/mol. Die hier angegebenen Molekulargewichte beziehen sich auf die mittels Gelpermeationschromatographie mit Hexafluorisopropanol als mobiler Phase und Polymethymethacrylat (PMMA) als Standard gemessenen Werte.

Bevorzugt sind solche aliphatischen Polyetheraminpolyole, insbesondere solche Poly-C₂-C₄-alkylenetheraminpolyole, worin das aliphatische Polyetheraminpolyol 1 bis 10 mol/kg Verzweigungsstellen aufweist.

Die Komponente (a) enthält in der Regel wenigstens ein Epoxidharz. Als Epoxidharze kommen für die Komponente (a) insbesondere solche in Betracht, die üblicherweise in härtbaren Epoxidharz-zusammensetzungen eingesetzt werden. Genannt seien insbesondere Verbindungen mit 1 bis 10 Epoxidgruppen, vorzugsweise mit mindestens zwei Epoxidgruppen im Molekül. Der Gehalt an Epoxid-Gruppen in typischen Epoxidharzen liegt im Bereich von 120 bis 3000 g/Äquivalent, gerechnet als sogenanntes Epoxidäquivalent gemäß DIN 16945.

Hierunter bevorzugt sind sogenannte Glycidyl-basierte Epoxidharze, insbesondere solche, die durch Veretherung aromatischer, aliphatischer oder cycloaliphatischen Polyole mit Epichlorhydrin hergestellt werden. Derartige Substanzen werden häufig auch als Polyglycidylether von aromatischen, bzw. als Polyglycidylether von aliphatischen oder cycloaliphatischen Polyolen bezeichnet.

Bei den Epoxidharzen kann es sich um Flüssigharze, um Festharze oder um Mischungen davon handeln. Flüssigharze unterscheiden sich von Festharzen durch geringere Viskosität. Zudem weisen Flüssigharze in der Regel einen höheren Anteil an Epoxidgruppen und dementsprechend ein niedrigeres Epoxidäquivalent auf. Flüssigharze werden häufig auch als Reaktivverdünner bezeichnet, da sie die Viskosität der Epoxidharzkomponente verringern.

Der Gehalt an Epoxidgruppen in typischen Flüssigharzen liegt üblicherweise im Bereich von 120 bis 200 g/Äquivalent und der der Festharze im Bereich von 250 bis 3000 g/Äquivalent, gerechnet als sogenanntes Epoxidäquivalent gemäß DIN 16945. Bevorzugt weist die Epoxidharzkomponente a1) ein mittleres Epoxidäquivaltent im Bereich von 120 bis 300 g/Äquivalent auf.

Die Viskosität der Flüssigharze liegt bei 25°C üblicherweise im Bereich von 1 bis 20 Pas, bevorzugt im Bereich von 5 bis 15 Pas. Die Viskosität der Festharze liegt bei 25°C üblicherweise im Bereich 5 bis 40 Pas, bevorzugt im Bereich von 20 bis 40 Pas. Die hier angegebenen Viskositäten sind die gemäß DIN 53015 bei 25°C als 40%ige Lösungen der Harze in Methylethylketon bestimmten Werte.

Geeignete Epoxidharze sind beispielsweise unter den Markenbezeichnungen EPILOX®, EPONEX®, EPIKOTE®, EPONOL®, D.E.R, ARALDIT® oder ARACAST® im Handel erhältlich.

In einer bevorzugten Ausführungsform umfasst das Epoxidharz a1) wenigstens einen Polyglycidylether eines aromatischen Polyols. Beispiele für Polyglycidylether aromatischer Polyole sind die vom Diglycidylether des Bisphenols A abgeleiteten Harze (DGEBA-Harze, R' = CH₃) und die vom Bisphenol F abgeleiteten Harze (R' = H), welche sich durch die folgende allgemeine Formel beschreiben lassen: 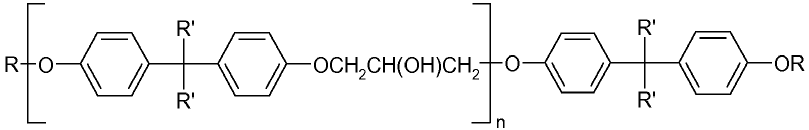 R= 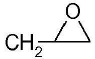 R' = H oder CH₃

In der Formel gibt der Parameter n die Anzahl der Wiederholungseinheiten an, wobei der Mittelwert von n mit dem jeweiligen mittleren Molekulargewicht korrespondiert.

Beispiele für Epoxidharze auf Basis von Polyglycidylethern aromatischer Polyole sind weiterhin Glycidylether von Phenol- und Kresol-basierten Novolaken. Novolake werden durch die säurekatalysierte Kondensation von Formaldehyd und Phenol oder Kresol hergestellt. Durch Umsetzung der Novolake mit Epichlorhydrin erhält man die Glycidylether der Novolake.

In einer anderen bevorzugten Ausführungsform der Erfindung ist das Epoxidharz ausgewählt aus Polyglycidylethern cycloaliphatischer Polyole und den Polyglycidylestern cycloaliphatischer Polycarbonsäuren. Beispiele für Polyglycidylether von cycloaliphatischen Polyolen sind Polyglycidylether auf Basis von kernhydriertem Bisphenol-A, die Polyglycidylether auf Basis von kernhydriertem Bisphenol F, Polyglycidylether auf Basis von kernhydrierten Novolaken und deren Gemische. Beispiele für solche Produkte sind das P 22-00 der Fa. LeunaHarze und Eponex 1510 der Fa. Hexion. Beispiele für Polyglycidylester von cycloaliphatischen Polycarbonsäuren ist Hexahydrophthalsäurediglycidylester

Als Epoxidharze sind ferner auch epoxidgruppenhaltige Polyacrylatharze geeignet. Diese werden in der Regel durch Copolymerisation von mindestens einem ethylenisch ungesättigten Monomer, das mindestens eine Epoxidgruppe, insbesondere in Form einer Glycidylethergruppe, im Molekül enthält, mit mindestens einem weiteren ethylenisch ungesättigten Monomer, das keine Epoxidgruppe im Molekül enthält, hergestellt, wobei vorzugsweise wenigstens eines der Comonomere ein Ester der Acrylsäure oder Methacrylsäure ist. Beispiele für ethylenisch ungesättigte Monomere, die mindestens eine Epoxidgruppe im Molekül enthalten, sind Glycidylacrylat, Glycidylmethacrylat und Allylglycidylether. Beispiele für ethylenisch ungesättigte Monomere, die keine Epoxidgruppe im Molekül enthalten, sind Alkylester der Acryl und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat. Weitere Beispiele für ethylenisch ungesättigte Monomere, die keine Epoxidgruppen im Molekül enthalten, sind Säuren, wie z. B. Acrylsäure und Methacrylsäure. Säureamide, wie z. B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z. B. Vinylacetat und hydroxylgruppenhaltige Monomere, wie z. B. Hydroxyethylacrylat und Hydroxyethylmethacrylat. Das epoxidgruppenhaltige Polyacrylatharz weist üblicherweise ein Epoxidäquivalentgewicht von 400 bis 2500, vorzugsweise 500 bis 1500, besonders bevorzugt 600 bis 1200 auf. Das zahlenmittlere Molekulargewicht (gelpermeationschromatographisch unter Verwendung eines Polystyrolstandards bestimmt) liegt typischerweise im Bereich von 1000 bis 15000, vorzugsweise von 1200 bis 7000, besonders bevorzugt von 1500 bis 5000. Die Glasübergangstemperatur (TG) liegt typischerweise im Bereich von 30 bis 80°C, vorzugsweise von 40 bis 70°C, besonders bevorzugt von 50 bis 70°C (gemessen mit Hilfe der Differentialkalorimetrie (DSC)). Epoxidgruppenhaltige Polyacrylatharze sind bekannt (vgl. z. B. EP-A-299 420, DE-B-22 14 650, DE-B-27 49 576, US-A-4,091,048 und US-A-3,781,379). Beispiele für solche Harze sind Epon 8021, Epon 8111, Epon 8161 der Fa. Hexion.

Die Epoxidharze können sich auch von anderen Epoxiden ableiten (Nichtglycidylether-Epoxidharze). Hierzu zählen insbesondere Verbindungen, einschließlich Oligomeren und Polymeren, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind. Beispiele für die Epoxidierungsprodukte von Verbindungen mit wenigstens einer cycloolefinischen Gruppe sind 4-Epoxyethyl-1,2-epoxycyclohexan und die Verbindung der folgenden Formel: 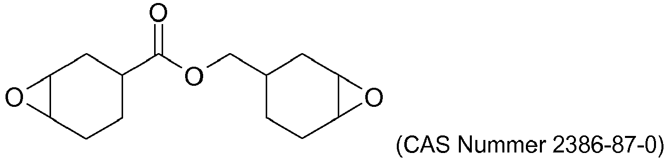 die beispielsweise von der Fa. Cytec unter der Bezeichnung Uvacure 1500 vertrieben wird. Bevorzugt werden die Verbindungen eingesetzt, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind, und deren Oligomere nicht alleine sondern in Kombination mit einer oder mehrerer der vorgenannten Substanzen, die wenigstens zwei Glycidylethergruppen im Molekül aufweisen.

Neben den Epoxidharzen und den Verbindungen der Formel I kann die Epoxidharzkomponente (a) auch einen oder mehrere konventionelle Reaktivverdünner enthalten (Bestandteil a3). Hierunter versteht man vor allem niedermolekulare Verbindungen mit einem Molekulargewicht von vorzugsweise maximal 400 Dalton, z. B. im Bereich von 100 bis 400 Dalton, die Oxirangruppen, vorzugsweise Glycidylgruppen, z. B. in Form von Glycidylethergruppen, Gylcidylestergruppen oder Glycidylamidgruppen, aufweisen. Die Epoxid-Funktionalität, d. h. die Zahl der Epoxidgruppen pro Molekül liegt bei den Reaktivverdünnern typischerweise im Bereich von 1 bis 4, insbesondere im Bereich von 1,2 bis 3. Hierunter bevorzugt sind insbesondere Glycidylether von aliphatischen oder cycloaliphatischen Alkoholen, die vorzugsweise 1, 2, 3 oder 4 OH-Gruppen und 2 bis 20 bzw. 4 bis 20 C-Atome aufweisen, sowie Glycidylether von aliphatischen Polyetherolen, die 4 bis 20 C-Atome aufweisen. Beispiele hierfür sind:
- Glycidylether von gesättigten monofunktionellen aliphatischen Alkoholen mit 2 bis 20 C-Atomen, wie beispielsweise C₂-C₂₀-Alkylmonoglycidylether wie 2-Ethylhexylglycidylether;
- Glycidylether von gesättigten Alkanpolyolen mit 2 bis 20 C-Atomen, z. B. die Glycidylether von 1,4-Butandiol, 1,6-Hexandiol, Trimethylolpropan oder von Pentaerythritol, wobei die vorgenannten Glycidylether-Verbindungen in der Regel eine Epoxid-Funktionalität im Bereich von 1 bis 3,0 und vorzugsweise im Bereich von 1,2 bis 2,5 aufweisen;
- Glycidylether von Polyetherolen mit 4 bis 20 C-Atomen, beispielsweise Glycidylether von Diethylenglykol, Triethylenglykol, Tetraethylenglykol, Dipropylenglykol oder Tripropylenglykol;
- Glycidylether von cycloaliphatischen Alkoholen mit 5 bis 20 C-Atomen wie beispielsweise Bisglycidylether von Cyclohexan-1,4-diyl, der Bisglycidylether von kernhydriertem Bisphenol A oder von kernhydriertem Bisphenol F,
- Glycidylether von Polyalkylenoxiden mit 2 bis 4 C-Atomen wie Polyethylenoxid oder Polypropylenoxid;
und Gemische der vorgenannten Substanzen.

Bevorzugte Reaktivverdünner sind Mono-, Di- und Triglycidylether aliphatischer oder cycloaliphatischen Mono-, Di- oder Trihydroxyverbindungen mit 2 bis 20 C-Atomen, und Diglycidylethern von Poly-C₂-C₄-alkylenethern.

Sofern erwünscht, werden die konventionellen Reaktivverdünner in der Epoxidharzkomponente (a) in einer Gesamtmenge von wenigstens 0,5 Gew.-%, insbesondere wenigstens 1 Gew.-%, bezogen auf das Gesamtgewicht der Epoxidharzkomponente (a), verwendet. In der Regel wird man jedoch die konventionellen Reaktivverdünner in einer Gesamtmenge von höchstens 50 Gew.%, insbesondere höchstens 20 Gew.-%, bezogen auf das Gesamtgewicht der Epoxidharzkomponente (a), verwenden. Vorzugsweise wird die Gesamtmenge an Reaktivverdünner plus Verbindung der Formel I nicht mehr als 1 Gewichtsteil, insbesondere nicht mehr als 0,8 Gewichtsteile und speziell nicht mehr als 0,5 Gewichtsteile, bezogen auf 1 Gewichtsteil der Epoxidharze a1) betragen. Sofern die Epoxidharzkomponente (a) einen oder mehrere konventionelle Reaktivverdünner enthält, liegt das Gewichtsverhältnis von Verbindung der Formel I zu konventionellem Reaktivverdünner üblicherweise in einem Bereich von 1 : 10 bis 10 : 1, insbesondere im Bereich von 1 : 5 bis 5 : 1.

Erfindungsgemäß enthält die Epoxidharzkomponente (a) wenigstens eine Verbindung der allgemeinen Formel I. Der Anteil der Verbindungen der Formel I an der Epoxidharzkomponente liegt vorzugsweise im Bereich von 1 bis 30 Gew.-%, insbesondere im Bereich von 2 bis 20 Gew.-%, bezogen auf das Gesamtgewicht der Epoxidharzkomponente (a).

Bevorzugt sind die Verbindungen der Formel (I), worin die Reste R¹, R², R³ und R⁴ unabhängig voneinander eine oder mehrere der folgenden Bedeutungen aufweisen:
- R¹: ist ausgewählt unter Wasserstoff, C₁-C₄-Alkyl, wie Methyl, Ethyl, n-Propyl oder iso-Propyl, C₁-C₄-Alkoxy-C₁-C₄-alkyl, C₅-C₆-Cycloalkyl, z.B. Cyclohexyl, Phenyl, Phenyl-C₁-C₄-alkyl, z.B. Benzyl;
- R²: ist ausgewählt unter Wasserstoff, C₁-C₄-Alkyl, wie Methyl, Ethyl, n-Propyl oder iso-Propyl, C₁-C₄-Alkoxy-C₁-C₄-alkyl, C₅-C₆-Cycloalkyl, z.B. Cyclohexyl, Phenyl, Phenyl-C₁-C₄-alkyl, z.B. Benzyl; oder
- R¹: und R² können auch gemeinsam für eine C₃-C₁₁-Alkylengruppe, bevorzugt eine C₄-C₆-Alkylengruppe, wie beispielsweise 1,4-Butandiyl, 1,5-Pentandiyl oder 1,6-Hexandiyl, insbesondere eine lineare C₅-Alkylengruppe (1,5-Pentandiyl) stehen;
- R³: ist ausgewählt unter Wasserstoff, C₁-C₄-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl und C₂-C₆-Alkinyl;
- R⁴: ist ausgewählt unter Wasserstoff, C₁-C₄-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl und C₂-C₆-Alkinyl.
- R³ und R⁴: können auch gemeinsam für eine C₄-C₆-Alkylengruppe, wie beispielsweise 1,4-Butandiyl, 1,5-Pentandiyl oder 1,6-Hexandiyl, stehen.

Insbesondere stehen einer oder beide Reste R¹ oder R² nicht für Wasserstoff. In bevorzugten Verbindungen der Formel I steht bzw. stehen wenigstens einer der Reste R³ und R⁴ für Wasserstoff. Besonders bevorzugt stehen beide Reste R³ und R⁴ für Wasserstoff.

Im Hinblick auf die erfindungsgemäße Verwendung sind die Verbindungen der Formel (I) besonders bevorzugt, worin die Reste R¹ und R² die folgenden Bedeutungen aufweisen, wobei die Reste R³ und R⁴ die zuvor angegebenen Bedeutungen aufweisen und vorzugsweise einer der Reste R³ oder R⁴ für Wasserstoff steht und insbesondere beide Reste R³ und R⁴ für Wasserstoff stehen:
R¹ ist ausgewählt unter Wasserstoff und C₁-C₄-Alkyl, insbesondere Wasserstoff, Methyl oder Ethyl;
R² ist ausgewählt unter C₁-C₄-Alkyl, insbesondere Wasserstoff, Methyl oder Ethyl;

In einer ebenfalls besonders bevorzugten Ausführungsform der Erfindung stehen R¹ und R² unabhängig voneinander für C₁-C₄-Alkyl, insbesondere für Methyl oder Ethyl. In dieser ganz besonders bevorzugten Ausführungsform weisen die Reste R³ und R⁴ die zuvor angegebenen Bedeutungen auf, wobei vorzugsweise wenigstens einer der Reste R³ oder R⁴ für Wasserstoff steht und insbesondere beide Reste R³ und R⁴ für Wasserstoff stehen.

Besonders bevorzugt sind dementsprechend Verbindungen der allgemeinen Formel la 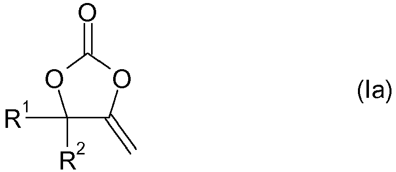 in denen R¹ und R² eine der oben gegebenen Bedeutungen aufweisen und deren Gemische. Besonders bevorzugt sind Verbindungen der allgemeinen Formel Ia, in denen R¹ und R² die in Tabelle 1 beschriebenen Bedeutungen zeigen.

**Tabelle 1: Beispiele von Verbindungen der Formel la**

| Nr. | R¹ | R² |
|---|---|---|
| 1 | H | Methyl |
| 2 | Methyl | Methyl |
| 3 | n-Propyl | Methyl |
| 4 | iso-Propyl | Methyl |
| 5 | n-Butyl | Methyl |
| 6 | iso-Butyl | Methyl |
| 7 | H | Ethyl |
| 8 | Methyl | Ethyl |
| 9 | Ethyl | Ethyl |
| 10 | iso-Propyl | Ethyl |
| 11 | n-Butyl | Ethyl |
| 12 | H | H |
| 13 | Methyl | H |
| 14 | n-Propyl | H |
| 15 | iso-Propyl | H |
| 16 | n-Butyl | H |
| 17 | iso-Butyl | H |

Hierunter sind besonders die folgenden Verbindungen und deren Gemische bevorzugt:
- 4,4-Diethyl-5-methylen-1,3-dioxolan-2-on
- 4,4-Dimethyl-5-methylen-1,3-dioxolan-2-on
- 4-Methyl-5-methylen-1,3-dioxolan-2-on
- 4-Ethyl-5-methylen-1,3-dioxolan-2-on
- 4-Ethyl-4-methyl-5-methylen-1,3-dioxolan-2-on
- 4-Isopropyl-5-methylen-1,3-dioxolan-2-on
- 4-Isopropyl-4-methyl-5-methylen-1,3-dioxolan-2-on
- 4-Methylen-1,3-dioxa-spiro[4.5]decan-2-on

Ganz besonders bevorzugt sind Verbindungen der Formel la, wobei R¹ und R² unabhängig voneinander für C₁-C₄-Alkyl, insbesondere für Methyl oder Ethyl stehen.

Die Verbindungen der Formeln I bzw. la, die im Folgenden auch als exo-Vinylencarbonate bezeichnet werden, sind grundsätzlich aus dem Stand der Technik bekannt, beispielsweise aus DE 1098953 oder DE 3433403.

Verbindungen der Formel I bzw. la, worin wenigstens einer der beiden Reste R³, R⁴ für Wasserstoff steht, können beispielsweise durch Umsetzung von ggf. substituierten Propargylalkoholen mit CO₂ oder einem Carbonsäureanhydrid in Gegenwart eines Katalysators hergestellt werden, wie auch in WO 2011/157617 beschrieben ist.

Verbindungen der Formel I bzw. la, in denen einer oder beide Reste R³ bzw. R⁴ für einen von Wasserstoff verschiedenen Rest stehen, können ausgehend von Verbindungen der Formel I, worin beide Reste R³ und R⁴ für Wasserstoff stehen, durch Heck-Kupplung, beispielsweise in Analogie zu der in Tetrahedron Lett. 2000, 5527-5531 beschriebenen Methode, hergestellt werden.

In bevorzugten Ausführungsformen der Erfindung enthält die Epoxidharzkomponente (a):
a1) wenigstens ein Epoxidharz aus der Gruppe der Polyglycidylether aromatischer Polyole, insbesondere wenigstens einen Polyglycidylether aromatischer Polyole, die vom Bisphenol A oder vom Bisphenol F abgeleitetet sind, sowie
a2) wenigstens eine Verbindung der Formel I, insbesondere eine der als bevorzugt genannten Verbindungen der Formel la und speziell eine Verbindung der Formel la, worin für C₁-C₄-Alkyl, insbesondere für Methyl oder Ethyl stehen.

In weiteren bevorzugten Ausführungsformen der Erfindung enthält die Epoxidharzkomponente (a):
a1) wenigstens ein Epoxidharz aus der Gruppe der Polyglycidether aromatischer Polyole, insbesondere wenigstens einen Polyglycidether aromatischer Polyole, die vom Bisphenol A oder vom Bisphenol F abgeleitetet sind,
a2) wenigstens eine Verbindung der Formel I, insbesondere eine der als bevorzugt genannten Verbindungen der Formel la und speziell eine Verbindung der Formel la, worin für C₁-C₄-Alkyl, insbesondere für Methyl oder Ethyl stehen; sowie
a3) wenigstens einen Reaktivverdünner, insbesondere wenigstens einen Reaktivverdünner ausgewählt unter Mono-, Di- und Triglycidylether aliphatischer oder cycloaliphatischen Mono-, Di- oder Trihydroxyverbindungen mit 2 bis 20 C-Atomen, und Diglycidylethern von Poly-C₂-C₄-alkylenethern,

Weiterhin hat es sich als vorteilhaft erwiesen, wenn die erfindungsgemäßen Epoxidharzzusammensetzungen zusätzlich eine aliphatische, cycloaliphatische oder araliphatische Mono- oder Dihydroxyverbindung mit 6 bis 10 C-Atomen enthält, die im Folgenden als Bestandteil d1) bezeichnet wird. Beispiele für aliphatische und cycloaliphatische Mono- und Dihydroxyverbindungen mit 6 bis 10 C-Atomen sind 1-Hexanol, 1-Heptanol, 1-Octanol, Hexandiol, 2-Ethylhexan-1-ol, Hydroxymethylcyclohexan, Cyclohexanol, Cycloheptanol und Bis(hydroxymethyl)cyclohexan. Beispiele für araliphatische Mono- und Dihydroxyverbindungen mit 6 bis 10 C-Atomen sind vor allem Benzylalkohol, 1-Phenylethanol, 2-Phenylethanol und die Isomere des Bis(hydroxymethyl)-benzols. Hierunter bevorzugt sind araliphatische Monohydroxyverbindungen, insbesondere Benzylalkohol. Der Bestandteil d1) kann sowohl in der Epoxidharzkomponente (a) wie auch in der Härterkomponente (b) formuliert sein. Vorzugsweise ist die Haupt- oder Gesamtmenge des Bestandteils d1) in der Härterkomponente (b) formuliert. Die Gesamtmenge an Bestandteil d1) liegt, sofern erwünscht im Bereich von 1 bis 20 Gew.-%, bezogen auf die Gesamtmenge an den Bestandteilen a1), a2), b1), c1) und d1).

Die Epoxidharzkomponente (a) kann darüber hinaus auch nicht-reaktive, organische Verdünnungsmittel enthalten. Hierunter versteht man organische Lösungsmittel, die bei Normaldruck einen Siedepunkt unterhalb 200 °C aufweisen und die mit den Epoxid-gruppen und den Gruppen eines gegebenenfalls vorhandenen Reaktivverdünners keine Reaktion unter Bindungsbildung eingehen. Derartige Verdünnungsmittel sind typischerweise organische Lösungsmittel, beispielsweise Ketone mit vorzugsweise 3 bis 8 C-Atomen wie Aceton, Methylethylketon, Cyclohexanon und dergleichen, Ester aliphatischer Carbonsäuren, vorzugsweise der Essigsäure, der Propionsäure oder der Butansäure, insbesondere die C₁-C₆-Alkylester dieser Säuren wie Ethylacetat, Propylacetat und Butylacetat, aromatische Kohlenwasserstoff insbesondere Alkylaromaten wie beispielsweise Toluol, Mesitylen, 1,2,4-Trimethylbenzol, n-Propylbenzol, Isopropy-Ibenzol, Cumol, oder Xylole und Mischungen von Alkylaromaten, insbesondere technische Gemische wie sie beispielsweise als Solvessomarken im Handel erhältlich sind, sowie aliphatische und cycloaliphatische Kohlenwasserstoffe.

In einer bevorzugten Ausführungsform enthält die Epoxidharzkomponente (a) nicht reaktive organische Lösemittel allenfalls in untergeordneten Mengen (weniger als 20 Gew.-%, insbesondere weniger als 10 Gew.-% oder weniger als 5 Gew.-%, bezogen auf das Gesamtgewicht der Epoxidharzkompenente (a) und besonders bevorzugt enthalten sie kein derartiges Lösemittel (100 % System).

Neben den vorgenannten Bestandteilen kann die Epoxidharzkompenente (a) die hierfür üblichen Füllstoffe und/oder Additive enthalten.

Geeignete Füllstoffe sind beispielsweise anorganische oder organische partikelförmige Materialien wie beispielsweise Calciumcarbonate und Silikate sowie anorganische Fasermaterialien wie beispielsweise Glasfaser. Auch organische Füllstoffe wie Kohlefaser und Mischungen aus organischen und anorganischen Füllstoffen, wie beispielsweise Mischungen aus Glas- und Kohlefasern oder Mischungen aus Kohlefasern und anorganischen Füllstoffen können Anwendung finden. Die Füllstoffe können in einer Menge von 1 bis 70 Gew.-%, bezogen auf das Gesamtgewicht der Epoxidharzkompenente (a), zugesetzt werden.

Geeignete herkömmliche Additive umfassen beispielsweise Antioxidantien, UV-Absorber/ Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, Katalysatoren, Adhäsionsregulatoren, optische Aufheller, Flammschutzmittel, Antitropfmittel, Nukleierungsmittel, Lösungsmittel und Reaktivverdünner sowie Gemische davon.

Die gegebenenfalls verwendeten Lichtstabilisatoren / UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren, und
t) basische Costabilisatoren.

Die erfindungsgemäßen Epoxidharzzusammensetzungen umfassen weiterhin eine Härterkomponente (b), die wenigstens einen aminischen Härter, im Folgenden auch Aminhärter (Bestandteil b1)), umfasst. Aminhärter vernetzen Epoxidharze durch Reaktion der primären oder sekundären Aminofunktionen der Polyamine mit den Epoxid-gruppen der Epoxidharze. Derartige Aminhärter haben typischerweise mindestens zwei primäre oder sekundäre Aminogruppen, im Allgemeinen haben sie 2 bis 6, insbesondere 2 bis 4 primäre oder sekundäre Aminogruppen.

Übliche Aminhärter sind beispielsweise
- aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, Trimethylhexamethylendiamin, 1-(3-Aminopropyl)-3-aminopropan, 1,3-Bis-(3-aminopropyl)propan, 4-Ethyl-4-methylamino-1-octylamin und dergleichen;
- cycloaliphatische Diamine, wie 1,2-Diaminocyclohexan, 1,3-Bis(aminomethyl)-cyclohexan, 1-Methyl-2,4-diaminocyclohexan, 4-(2-Aminopropan-2-yl)-1-methylcyclohexan-1-amin, Isophorondiamin, 4,4'-Diaminodicyclohexylmethan, 3,3'-Dimethyl-4,4'-diaminodicyclohexylmethan, 4,8-Diamino-tricyclo[5.2.1.0]-decan, Norbornandiamin, Menthandiamin, Menthendiamin und dergleichen;
- aromatische Diamine, wie Toluylendiamin, Xylylendiamin, insbesondere meta-Xylylendiamin, Bis(4-aminophenyl)methan (MDA oder Methylendianilin), Bis(4-aminophenyl)sulfon (auch als DADS, DDS oder Dapson bekannt) und dergleichen;
- cyclische Polyamine, wie Piperazin, N-Aminoethylpiperazin und dergleichen;
- Polyetheramine, insbesondere difunktionelle und trifunktionelle primäre Polyetheramin auf der Basis von Polypropylenglykol, Polyethylenglykol, Polybutylenoxid, Poly-(1,4-butandiol), Poly-THF oder Polypentylenoxid, z.B. 4,7,10-Trioxatridecan-1,3-diamin, 4,7,10-Trioxatridecan-1,13-diamin, 1,8-Diamino-3,6-dioxaoctan (XTJ-504 von Huntsman), 1,10-Diamino-4,7-dioxadecan (XTJ-590 von Huntsman), 1,12-Diamino-4,9-dioxadodecan (BASF SE), 1,3-Diamino-4,7,10-trioxatridecan (BASF), primäre Polyetheramine auf der Basis von Polypropylenglykol mit einer mittleren Molmasse von 230 wie z.B. Polyetheramine D 230 (BASF SE) oder Jeffamine® D 230 (Huntsman), difunktionelle, primäre Polyetheramine auf der Basis von Polypropylenglykol mit einer mittleren Molmasse von 400, z.B. Polyetheramine D 400 (BASF SE) oder Jeffamine® XTJ 582 (Huntsman), difunktionelle, primäre Polyetheramine auf Basis von Polypropylenglykol mit einer mittleren Molmasse von 2000, wie z.B. Polyetheramine D 2000 (BASF SE), Jeffamine® D2000 oder Jeffamine® XTJ 578 (Huntsman), difunktionelle, primäre Polyetheramine auf der Basis von Propylenoxid mit einer mittleren Molmasse von 4000, wie z.B. Polyetheramin D 4000 (BASF SE), trifunktionelle, primäre Polyetheramine, hergestellt durch Reaktion von Propylenoxid mit Trimethylolpropan gefolgt durch eine Aminierung der endständigen OH-Gruppen, mit einer mittleren Molmasse von 403, wie z.B. Polyetheramin T 403 (BASF SE) oder Jeffamine® T 403 (Huntsman), trifunktionelle, primäre Polyetheramine, hergestellt durch Reaktion von Propylenoxid mit Glycerin gefolgt durch eine Aminierung der endständigen OH-Gruppen, mit einer mittleren Molmasse von 5000, wie z.B. Polyetheramin T 5000 (BASF SE) oder Jeffamine® T 5000 (Huntsman), aliphatische Polyetheramine, die aus einem mit Propylenoxid gepfropftem Polyethylenglykol aufgebaut sind und eine mittlere Molmasse von 600 aufweisen, wie z.B. Jeffamine® ED-600 bzw. Jeffamine® XTJ 501 (jeweils Huntsman), aliphatische Polyetheramine, die aus einem mit Propylenoxid gepfropftem Polyethylenglykol aufgebaut sind und eine mittlere Molmasse von 900 aufweisen, wie z.B. Jeffamine® ED-900 (Huntsman), aliphatische Polyetheramine, die aus einem mit Propylenoxid gepfropftem Polyethylenglykol aufgebaut sind und eine mittlere Molmasse von 2000 aufweisen, wie z.B. Jeffamine® ED-2003 (Huntsman), difunktionelle, primäre Polyetheramine, hergestellt durch Aminierung eines mit Propylenoxid gepfropften Diethylenglykols mit einer mittleren Molmasse von 220, wie z.B. Jeffamine® HK-511 (Huntsman), aliphatische Polyetheramine auf der Basis eines Copolymers aus Poly(tetramethylenetherglycol) und Polypropylenglycol mit einer mittleren Molmasse von 1000, wie z.B. Jeffamine® XTJ-542 (Huntsman), aliphatische Polyetheramine auf der Basis eines Copolymers aus Poly(tetramethylenetherglycol) und Polypropylenglycol mit einer mittleren Molmasse von 1900, wie z.B. Jeffamine® XTJ-548 (Huntsman), aliphatische Polyetheramine auf der Basis eines Copolymers aus Poly(tetramethylenetherglycol) und Polypropylenglycol mit einer mittleren Molmasse von 1400, wie z.B. Jeffamine® XTJ-559 (Huntsman), Polyethertriamine auf der Basis eines mit Butylenoxid gepfropftem mindestens dreiwertigen Alkohols mit einer mittleren Molmasse von 400, wie z.B. Jeffamine® XTJ-566 (Huntsman), aliphatische Polyetheramine hergestellt durch Aminierung von mit Butylenoxid aufgepfropften Alkoholen mit einer mittleren Molmasse von 219, wie z.B. Jeffamine® XTJ-568 (Huntsman), Polyetheramine auf der Basis von Pentaerythrit und Propylenoxid mit einer mittleren Molmasse von 600, wie z.B. Jeffamine® XTJ- 616 (Huntsman), Polyetheramine auf der Basis von Triethylenglykol mit einer mittleren Molmasse von 148, z.B. Jeffamine® EDR-148 (Huntsman), difunktionelle, primäre Polyetheramine, hergestellt durch Aminierung eines mit Propylenoxid gepfropften Ethylenglykols, mit einer mittleren Molmasse von 176, wie z.B. Jeffamine® EDR-176 (Huntsman), sowie Polyetheramine, hergestellt durch Aminierung von PolyTHF mit einer mittleren Mollmasse von 250, z.B. PolyTHF-Amin 350 (BASF SE) und Mischungen dieser Amine;
- Polyamidoamine (Amidopolyamine), die durch die Reaktion von Polycarbonsäuren, insbesondere Dicarbonsäuren wie Adipinsäure oder dimeren Fettsäuren (z.B. dimere Linolsäure) mit niedermolekularen Polyaminen, wie Diethylentriamin, 1-(3-Aminopropyl)-3-aminopropan oder Triethylentetramin oder anderen Diaminen, wie die zuvor genannten aliphatischen oder cycloaliphatischen Diamine, erhältlich sind oder alternativ durch Michael-Addition von Diaminen an Acrylsäureester und anschließende Polykondensation der erhaltenen Aminosäureester erhältlich sind; oder
- Phenalkamine (auch Phenolalkanamine), worunter Phenol oder Phenolderivate verstanden werden, welche an mindestens einem C-Atom des Ringsystems durch Kohlenwasserstoffgruppen substituiert sind, welche primäre oder sekundäre Aminogruppen enthalten; abgesehen von der Hydroxylgruppe des Phenols oder Phenolderivats und den primären oder sekundären Aminogruppen enthalten die Phenalkamine keine weiteren funktionellen Gruppen. Insbesondere enthalten die Phenalkamine sowohl primäre als auch sekundäre Aminogruppen. Gut geeignete Phenalkamine enthalten vorzugsweise insgesamt 2 bis 10, insbesondere 2 bis 8 und in einer besondere Ausführungsform 4 bis 6 derartiger Aminogruppen; bevorzugt handelt sind es sich um Phenalkamine auf Basis von Cardanol, welches im Cashew-Schalenöl enthalten ist; auf Cardanol basierende Phenalkamine sind an mindestens einem, vorzugsweise an ein bis drei C-Atomen des Ringsystems durch vorstehend beschriebene, primäre oder sekundäre Aminogruppen enthaltende, vorzugsweise aliphatische Kohlenwasserstoffgruppen substituiert. Insbesondere finden sich diese Substituenten in ortho- oder para-Stellung zur Hydroxylgruppe; Phenalkamine können durch Mannich-Reaktion aus dem Phenol oder Phenolderivat, einem Aldehyd, und einer Verbindung mit mindestens einer primären oder sekundären Aminogruppe hergestellt werden. Bei den Phenalkaminen handelt es sich daher um Mannich-Basen oder Addukte von Aminoverbindungen, insbesondere einer der vorstehenden Amino-verbindungen an Epoxidverbindungensowie Mischungen der vorgenannten Aminhärter.

Bevorzugt enthält der Aminhärter b1) als Hauptbestandteil wenigstens eine aliphatische, cycloaliphatische oder araliphatische Verbindung mit 4 bis 20 C-Atomen, insbesondere 6 bis 10 C-Atome, die 1, 2, 3 oder 4 primäre NH₂-Gruppen aufweist. Derartige Verbindungen werden im Folgenden auch als Haupt-Härter bezeichnet und machen in der Regel wenigstes 50 Gew.-%, insbesondere wenigstens 70 Gew.-%, bezogen auf die Gesamtmenge der Aminhärter aus. In derartigen Härtern sind die primären NH₂-Gruppen vorzugsweise an CH₂-Gruppen gebunden. Neben den primären NH₂-Gruppen können derartige bevorzugte Härter ein oder mehrere, z.B. 1, 2, 3 oder 4 sekundäre oder tertiäre Aminogruppen oder Hydroxylgruppen aufweisen. Vorzugsweise weisen die bevorzugten Härter neben den primären, sekundären, und tertiären Aminogruppen sowie den Hydroxylgruppen keine weiteren funktionellen Gruppen auf.

Bevorzugte Haupt-Härter sind z.B. lineare oder verzweigte aliphatische Aminverbindungen, welche zwei primäre Aminogruppen und ansonsten keine weiteren funktionellen Gruppen enthalten, z.B. C₂- bis C₈-Alkylendiamine, wie Ethylendiamin, Propylendiamin oder Butylendiamin.

Bevorzugte Co-Härter sind z.B. auch aliphatische Aminverbindungen, welche eine oder zwei primäre Aminogruppen und ein oder zwei Hydroxylgruppen und ansonsten keine weiteren funktionellen Gruppen enthalten, z.B. Monoamine, wie C2- bis C8- Alkanolamine, wie Ethanolamin, Isopropanolamin.

Bevorzugte Haupt-Härter sind z.B. auch aliphatische Aminverbindungen, welche eine primäre Aminogruppe und eine tertiäre Aminogruppe ansonsten keine weiteren funktionellen Gruppen enthalten. Genannt seien z.B. Verbindungen der Formel II

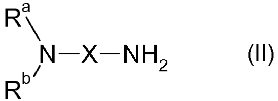

In Formel II stehen R^{a} und R^{b} unabhängig voneinander für eine C₁-C₁₀-, vorzugsweise eine C₁-C₄- Alkylgruppe. X steht für eine C₂-C₁₀-, vorzugsweise eine C₂-C₄-Alkylengruppe. Die Alkylengruppe kann verzweigt oder linear sein; sie ist an beliebiger Stelle durch die tertiäre und die primäre Aminogruppe substituiert. In einer bevorzugten Ausführungsform ist die Alkylengruppe linear und endständig durch die tertiäre und primäre Aminogruppe substituiert. Als eine der hier besonders bevorzugten Haupt-Härter sei z.B. 3-(Dimethylamino)propylamin (DMAPA) genannt.

Bevorzugte Haupt-Härter sind auch aliphatische Aminverbindungen, welche eine oder zwei primäre Aminogruppen, vorzugsweise eine primäre Aminogruppe, und eine sekundäre Aminogruppe und eine Hydroxylgruppe und ansonsten keine weiteren funktionellen Gruppen enthalten. Hierbei handelt es sich insbesondere um N-(2-Aminoalkyl)-alkanolamine, z.B. N-(2-Aminethyl)ethanolamin (H₂N-CH₂-CH₂-NH-CH₂-CH₂-OH). Bevorzugt bestehen die beiden Alkylengruppen in diesen Verbindungen aus 2 bis 8 C-Atomen.

Bevorzugte araliphatische Haupt-Härter sind z.B. durch ein, zwei oder drei Aminomethylengruppen (H₂N-CH₂-) substituiertes Benzol. Insbesondere handelt es sich um Benzol, welches durch zwei H₂N-CH₂- Gruppen an beliebiger Position des Benzolrings substituiert ist, z.B. um meta-Xylylendiamin mit der Formel

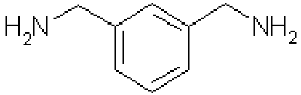

Bevorzugte cycloaliphatische Haupt-Härter sind z.B. auch durch ein bis drei Aminomethylengruppen (H₂N-CH₂-) substituiertes Cyclohexan. Insbesondere handelt es sich um Cyclohexan, welches durch zwei H₂N-CH₂-Gruppen an beliebiger Position des Benzolrings substituiert ist.

In Betracht kommen natürlich auch beliebige Mischungen der vorstehenden Haupt-Härter.

Die Haupt-Härter haben vorzugsweise ein Molekulargewicht kleiner 500 g/mol, insbesondere kleiner 300 g/mol. Bevorzugte Haupt-Härter weisen insgesamt maximal 10 C-Atome auf.

Von den oben genannten Haupt-Härtern sind die araliphatischen Verbindungen und deren Mischungen mit einer oder mehreren aliphatischen oder cycloaliphatischen Haupt-Härtern bevorzugt. Besonders bevorzugt umfasst der Aminhärter b1) als Hauptbestandteil, d.h. zu wenigstens 50 Gew.-%, insbesondere zu wenigstens 70 Gew.-%, bezogen auf die Gesamtmenge an Aminhärtern, wenigstens eine araliphatische Verbindung, insbesondere wenigstens ein durch zwei oder drei Aminomethylengruppen (H₂N-CH₂-) substituiertes Benzol und speziell meta-Xylylendiamin auf.

Neben den als Haupt-Härtern genannten Verbindungen kann der Aminhärtner eine oder mehrere der vorgenannten Aminhärter-Substanzen enthalten, die nicht unter die vorstehende Definition der Haupt-Härter fallen, diese werden, wie oben ausgeführt, im Nachfolgenden als Co-Härter bezeichnet. Der Anteil dieser Co-Härter ist dann entsprechend bei maximal 50 Gew.-%, insbesondere maximal 30 Gew.-%, z.B. im Bereich von 1 bis 50 Gew.-%, insbesondere 2 bis 30 Gew.-%, bezogen auf die Gewichtssumme aller Aminhärter. Derartige Co-Härter sind z.B. Polyamidoamine, Phenalkamine, Epoxy-Aminaddukte, Polyetheramine oder sonstige von den Haupt-Härtern verschiedenen Aminverbindungen oder deren Gemische. Bevorzugt handelt es sich bei den Co-Härtern um Polyamidoamine, Phenalkamine, Epoxy-Aminaddukte, Polyetheramine oder deren Gemische.

Neben den Aminhärtern b1), dem gegebenenfalls in der Härterkomponente (b) formulierten Bestandteil c1) sowie dem gegebenenfalls in der Härterkomponente (b) formulierten Bestandteil d1) kann die Härterkomponente (b) weitere Bestandteile enthalten. Als derartige Bestandteile kommen z.B. die oben im Zusammenhang mit der Epoxidharz-Komponente (a) genannten Additive in Betracht. Als derartige weitere Bestandteile kommen auch Katalysatoren in Betracht, welche die Härtungsreaktion beschleunigen, z.B. Phosphoniumsalze organischer oder anorganischer Säuren, Imidazol und Imidazolderivate oder quartäre Ammoniumverbindungen. Die Katalysatoren (auch Beschleuniger genannt) werden, sofern erwünscht, in Anteilen von 0,01 Gew.-% bis etwa 10 Gew.-%, bezogen auf das Gesamtgewicht der Bestandteile a1), a2), b1), c1) und d1) eingesetzt. In einer bevorzugten Ausgestaltung werden keine Katalysatoren benötigt, d. h. der Gehalt an Katalysatoren in der Zusammensetzung beträgt weniger als 0,01 Gew.-%, bezogen auf das Gesamtgewicht der Bestandteile a1), a2), b1), c1) und d1).

Die zur Aushärtung benötigte Menge an Aminhärter b1) bestimmt sich in bekannter Weise über die Anzahl der Epoxidgruppen in der Formulierung und die Anzahl der funktionellen Gruppen in der Härterkomponente (b). Die Anzahl der Epoxidgruppen im Epoxidharz wird als sogenanntes Epoxidäquivalent angegeben. Das Epoxidäquivalent wird gemäß DIN 16945 bestimmt. Die Anzahl der primären und sekundären Aminogruppen kann über die Aminzahl gemäß DIN 16945 berechnet werden.

Die Aminhärter b1) werden in solchen Mengen eingesetzt, dass das Molverhältnis der Anzahl aller primären und sekundären Aminogruppen zu der Gesamtzahl aller Epoxid-gruppen im Epoxidharz a1) und im Reaktivverdünner a3) plus der Molzahl der Verbindung I im Bereich von 2 : 1 bis 1 : 2, vorzugsweise im Bereich von 1,5 : 1 bis 1 : 1,5 liegt und insbesondere etwa 1 : 1 beträgt. Bei einem stöchiometrischen Verhältnis von etwa 1 : 1 erhält man ein gehärtetes Harz mit optimalen duroplastischen Eigenschaften. Je nach gewünschten Eigenschaften des Harzes nach Vernetzung kann es aber auch sinnvoll sein, Härter und Epoxidharz in anderen Verhältnissen der reaktiven Gruppen einzusetzen.

In den erfindungsgemäßen Epoxidharzzusammensetzungen beträgt die Gesamtmenge an Aminhärter b1) in der Regel 0,1 Gew.-% bis 50 Gew.-%, häufig 0,5 bis 40 Gew.-% und insbesondere 1 bis 30 Gew.-%, bezogen auf die Gewichtssumme aus Epoxidharz a1), Verbindung der Formel I, dem gegebenenfalls vorhandenen Reaktivverdünner a3), Aminhärter b1) und dem Bestandteil c1).

Neben dem erfindungsgemäß verwendeten Aminhärter a1) können auch andere Härter, z.B. Anhydridhärter, mitverwendet werden. In einer bevorzugten Ausführungsform werden jedoch ausschließlich Aminhärter a1) zur Härtung verwendet.

Zum Aushärten der erfindungsgemäßen Epoxidharz-Zusammensetzung wird die Epoxidharzkomponente (a) mit der Härterkomponente (b) in bekannter Weise vermischt.

Wie bereits erwähnt, sind die Komponenten (a) und (b) der erfindungsgemäßen Epoxidharz-Zusammensetzung in der Regel separat, d.h. als Mehrkomponentenkit, insbesondere als Zweikomponentenkit (vorzugsweise ein Zweikomponentenkit mit den Komponenten (a) und (b)), formuliert.

Unter einem Mehrkomponentenkit ist insbesondere ein Zweikomponentenkit (vorzugsweise ein Zweikomponentenkit mit den Komponenten (a) und (b)), vorzugsweise eine Zwei- oder ferner Mehrkammervorrichtung, zu verstehen, worin die miteinander reaktionsfähigen Komponenten (a) und (b) so enthalten sind, dass sie während der Lagerung nicht miteinander reagieren können, vorzugsweise so, dass sie vor der Anwendung nicht miteinander in Berührung kommen. Besonders geeignet sind Patronen, beispielsweise aus Kunststoff, Keramik oder insbesondere Glas, in denen die Komponenten durch (beispielsweise bei Eintreiben eines Verankerungsmittels in eine Aussparung, wie ein Bohrloch) zerstörbare Abgrenzungswände voneinander getrennt angeordnet sind, beispielsweise als ineinander verschachtelte Patronen, wie Ampullen, Folienbeutel mit zwei oder mehr Kammern, oder Behältnisse wie Eimer oder Wannen mit mehreren Kammern oder Sets (z. B. Gebinde) von zwei oder mehr derartigen Behältnissen, wobei zwei oder mehr Komponenten der jeweiligen härtbaren Masse, insbesondere zwei Komponenten (a) und (b) wie oben und unten definiert, jeweils räumlich voneinander getrennt als Kit oder Set vorliegen, bei denen der Inhalt nach Vermischen oder unter Vermischen auf die Anwendungsstelle (insbesondere mittels Geräten zum Auftragen wie Spachteln oder Pinseln oder eines Statikmischers), beispielsweise eine Fläche zum Befestigen von Fasern, Gelegen, Geweben, Composites oder dergleichen, oder in eine Aussparung, wie ein Bohrloch, insbesondere zum Befestigen von Verankerungsmitteln wie Ankerstangen oder dergleichen, verbracht wird; sowie Mehr- oder insbesondere Zweikomponentenkartuschen, in deren Kammern die mehreren oder vorzugsweise zwei Komponenten (insbesondere (a) und (b)) für eine härtbare Masse für Befestigungszwecke mit oben und nachstehend genannten Zusammensetzungen zur Aufbewahrung vor der Nutzung enthalten sind, wobei vorzugsweise auch ein Statikmischer zum entsprechenden Kit gehört. In den Fällen der Folienbeutel und der Mehrkomponentenkartuschen kann auch eine Vorrichtung zum Entleeren zum Mehrkomponentenkit gehören, doch kann diese vorzugsweise auch (beispielsweise zur mehrfachen Verwendung) unabhängig vom Kit sein. In dem Mehrkomponentenkit, insbesondere den Zweikomponentenkits, wie vor- und nachstehend beschrieben, liegt in einer günstigen Ausführungsform der Erfindung das Massenverhältnis der Komponenten (a) zu (b) bei 10 : 1 oder weniger, insbesondere 5 : 1 oder weniger, vorzugsweise bei 4 : 1 oder weniger, wobei vorteilhaft jeweils die Untergrenze bei 1 : 2, insbesondere bei 1 : 1 liegt. Insbesondere liegt das Massenverhältnis von Epoxidharzkomponente (a) zur Härterkomponente (b) bei etwa 2,5 : 1 bis 3,5 : 1.

Die erfindungsgemäßen Epoxidharzzusammensetzungen sind grundsätzlich für alle Anwendungen geeignet, für die Epoxidharzzusammensetzungen üblicherweise verwendet werden. Hierzu zählen die Verwendung in Beschichtungsmitteln, in Gießmassen, zur Herstellung von Verbundwerkstoffen sowie in Strukturklebstoffen.

Gemäß einer bevorzugten Ausführungsform finden die erfindungsgemäßen Epoxidharzzusammensetzungen in Injektionsmörteln Verwendung. Wie bereits einleitend erwähnt, werden Injektionsmörtel zur chemischen Befestigungs- bzw. Verankerungstechnik eingesetzt. Hierzu werden die Komponenten (a) und (b) der erfindungsgemäßen Merkomponentenzusammensetzung, gemeinsam mit einem Verankerungselement, beispielsweise einem Metallstift, einer Metallstange, Ankerstift oder Metallhaken in eine in einem Substrat, verzugsweise einem mineralischen Substrat, beispielsweise Stein oder insbesondere Beton, befindliche Aussparung, z.B. ein Bohrloch, eingebracht. Beim Aushärten des Epoxidharzkomponente (a) entsteht ein fester Verbund des Verankerungselements mit dem Substrat. Das Einbringen der Komponente (a) und (b) sowie des Verankerungselements kann grundsätzlich gleichzeitig oder nacheinander erfolgen. Beispielsweise kann man zunächst die Komponenten (a) und (b) in die Aussparung einbringen und dann das Verankerungselement in die zumindest teilweise mit der Mehrkomponenten-Epoxidharzzusammensetzung gefüllte Aussparung einsetzen. Man kann auch umgekehrt vorgehen und zunächst das Verankerungselement in die Aussparung einbringen und dann die Komponenten (a) und (b) in den verbliebenen Raum der Aussparung einbringen. Hierzu sind grundsätzlich die zuvor genannten Patronensysteme ebenso wie die Injektionssysteme geeignet.

Die folgenden Beispiele dienen der Erläuterung der Erfindung. Es wurden die folgenden Ausgangsprodukte eingesetzt:
Epoxidharz 1 (EH1): Aromatisches Epoxidharz auf Basis von Bisphenol A mit einem Epoxid-Äquivalent von 182 - 192 g/Äquiv. und einer Viskosität bei 25°C im Bereich von 10 - 14 Pas (Epilox A 19-03).
Epoxidharz 2 (EH2): Aromatisches Epoxidharz auf Basis von Bisphenol F mit einem Epoxid-Äquivalent von 167-173 g/Äquiv. und einer Viskosität bei 25°C im Bereich von 2,5 - 4,0 Pas (Epilox F17-00).
Reaktivverdünner 1 (RV1): Monoglycidylether eines C₁₂-C₁₄-Alkohols: Epoxid-Äquivalent von 282 g/Äquiv. (Epilox P13-18).
Reaktivverdünner 2 (RV2): Diglycidylether von 1,6-Hexandiol: Epoxid-Äquivalent von 147 g/Äquiv. (Epilox P13-20).
Reaktivverdünner 3 (RV3): Triglycidylether von Trimethylolpropan: Epoxid-Äquivalent von 143 g/Äquiv. (Epilox P13-30).
Reaktivverdünner 4 (RV4): Diglycidylether auf Basis von Polyoxypropylenglykol: Epoxid-Äquivalent von 335 g/Äquiv. (Epilox P13-42).
Verbindung I (AX1): 4,4-Dimethyl-5-methylen-1,3-dioxolan-3-on.

Aliphatisches Polyetheraminpolyol (PEAOH): Polymer auf Basis von Triethanolamin; zahlenmittleres Molekulargewicht 4000-5000 g/mol, gewichtsmittleres Molekulargewicht 8000-9000 g/mol, OH-Zahl 580-600 mg KOH/g) (bestimmt nach DIN 53240).

Aliphatisches Polyalkylenetherpolyol (PTHF): PolyTHF® der BASF SE; Mn = 1000 g/mol).
Additiv 1: Polyquaternium-86 (PQ86): Quaternäres Polymertensid (Luvigel Advanced der BASF SE).
Additiv 2: Benzylalkohol.
MXDA: meta-Xylylendiamin.

Durch Vermischen der Einsatzstoffe wurden die in Tabelle 1 angegebenen Epoxidharzkomponenten a) und die in Tabelle 2 angegebenen Härterkomponenten b) hergestellt. Das durchschnittliche Epoxidäquivalent EEWφ wurde aus den Epoxidäquivalenten der Bestandteile berechnet, wobei für AX1 ein Epoxidäquivalent von 71 g/eq zugrunde gelegt wurde.

Die Messungen der Viskositäten der Härter- und Epoxidharzkomponenten erfolgten an einem schubspannungsgesteuerten Platte-Platte Rheometer (MCR 301, Anton Paar) mit einem Plattendurchmesser von 25 mm und einem Spaltabstand von 0.25 mm bei 23°C und einer Scherrate von 100 s⁻¹.

**Tabelle 1: Epoxidharzkomponenten (a)**

| Harz # | EH1 | EH2 | Reaktivverdünner | | AX1 | EEWφ ¹⁾ | Viskosität |
|---|---|---|---|---|---|---|---|
| | [g] | [g] | Typ | [g] | [g] | [g/eq] | [mPas] |
| 1 | 90 | - | - | - | 10 | 157 | 2500-3000 |
| 2 (V) | 90 | - | RV1 | 10 | - | 189 | 2000-2200 |
| 3 | 85 | - | RV2 | 5 | 10 | 156 | 1550-1650 |
| 4 | 55 | 30 | RV3 | 5 | 10 | 152 | 1600-1650 |
| 5 | 60 | 25 | RV4 | 5 | 10 | 157 | 1500-1550 |
| 6 | 60 | 25 | RV2 | 5 | 10 | 153 | 1250-1300 |
| 7 | 90 | - | RV4 | 5 | 5 | 172 | 3500-4100 |

| | | | | | | | |
|---|---|---|---|---|---|---|---|
| 1)Mittleres Epoxidäquivalent | | | | | | | |

**Tabelle 2: Härterkomponenten (b)**

| Härter # | MXDA | PEAOH | PTHF | AX1 | Additiv | AHEWφ ²⁾ | Viskosität |
|---|---|---|---|---|---|---|---|
| | [g] | [g] | [g] | [g] | Typ / [g] | [g/eq] | [mPas] |
| 1 | 22,0 | 11,0 | - | - | - | 51 | 150-160 |
| 2 | 21,9 | 9,0 | - | - | 1 / 2,4 | 52 | 500-550 |
| 3 | 21,9 | 5,7 | - | - | 2 / 5,7 | 52 | 50-100 |
| 4 | 21,9 | - | 11,4 | - | - / - | 52 | 50-100 |
| 5 | 21,9 | - | 5,7 | - | 1/5,7 | 52 | 400-450 |
| 6 (V) | 21,9 | - | - | - | 2/11,4 | 52 | 10-20 |
| 7 | 21,9 | 4,0 | - | 3,4 | 2/3,4 | 56 | 50-100 |

| | | | | | | | |
|---|---|---|---|---|---|---|---|
| 2) Mittleres Amin-Wasserstoff-Äquivalent | | | | | | | |

Die erfindungsgemäßen Epoxidharzzusammensetzung wurden durch Vermischen stöchiometrischer Mengen der Epoxidharzkomponenten (a) und Härterkomponenten (b) hergestellt und sofort untersucht. Das Mischungsverhältnis MV in g Komponente (a) zu g Komponente (b) ist in Tabelle 3 angegeben. Es wurden die folgenden Untersuchungen durchgeführt, die Ergebnisse sind in Tabelle 3 zusammengestellt.
1) Bestimmung der Gelzeiten (Gelpunkt GP): Die Bestimmung der Gelzeiten erfolgte durch rheologische Messungen. Hierzu wurden die Zusammensetzungen an einem schubspannungsgesteuerten Platte-Platte Rheometer (MCR 301, Anton Paar) mit einem Plattendurchmesser von 15 mm und einem Spaltabstand von 0,25 mm bei unterschiedlichen Temperaturen untersucht. Die Messung wurde rotierend-oszillierend bei 10°C und 40°C durchgeführt. Der Schnittpunkt von Verlustmodul (G") und Speichermodul (G') lieferte die Gelzeit (Gelpunkt in h).
2) Bestimmung der Glasübergangstemperatur T_{G}: Die Bestimmung der Glasübergangstemperatur erfolgte mittels Dynamischer Differenzkalorimetrie (DSC) nach ASTM D3418 unter Anwendung des folgenden Temperaturprofils: Aufheizen von 0 bis 180°C: Heizrate 5 K/min; 180°C Tempern für 30 min.; Abkühlen auf 0°C mit 20 K/min; erneutes Aufheizen auf 220°C mit 20 K/min.
3) Shore D-Härte (S_{D}): Die Shore D-Härte erfolgte an 48h bei 23°C ausgehärteten Proben bei 23°C mittels eines Durometers (TI Shore Prüfstand, Sauter Messtechnik).
4) Verbundspannung: Die Ermittlung der Verbundspannung erfolgte durch axiale Zugversuche in Anlehnung an ETA 001 - 5, (Tabelle 5.6, Zeile 2 (A2 conf)). Hierzu wurden in zylindrische Betonprüfkörper (d 115 mm, h 150 mm) Bohrlöcher mit einem Durchmesser von 14 mm und einer Tiefe von 72 mm eingebracht. Die Bohrlöcher wurden durch zweimaliges Ausblasen mit Pressluft (6 bar), gefolgt von zweimaligem Ausbürsten und erneutem zweimaligen Ausblasen mit Pressluft gereinigt. Die Epoxidharzkomponente (a) und die Härterkomponente (b) wurden in einen Messbecher gegeben, 45 s mit einem Rührgerät homogenisiert und in das Bohrloch gegeben. Anschließend wurde innerhalb von 3 Minuten, gerechnet vom Vermischen der Komponenten, ein Edelstahlanker (Gewindestange M12) mit einer Setztiefe von 70 mm in das Bohrloch eingebracht. Die Zugversuche wurden nach einer Aushärtungszeit von wenigstens 44 h bei 20°C mit einem hydraulischen Hohlkolben durchgeführt. Alle Versuche wurden dreimal wiederholt.

**Tabelle 3:**

| **Bsp** | Harz | Härter | MV [g/g] | GP_{(10°C)} [min] | GP_{(40°C)} [min] | T_{G} [°C] | S_{D} | Verbundspannung [N/mm²] |
|---|---|---|---|---|---|---|---|---|
| **1** | **3** | 1 | 3,055 | 420 | 73 | 79 | 92 | 29,8 |
| **2** | **4** | 1 | 2,982 | 415 | 79 | 83 | 89 | 28,8 |
| **3** | **5** | 1 | 3,087 | 452 | 80 | 79 | 92 | 34,3 |
| **4** | **6** | 1 | 2,997 | 423 | 83 | 81 | 93 | 28,8 |
| **5** | **3** | 2 | 2,996 | 374 | 83 | 87 | 88 | |
| **6** | **5** | 2 | 3,028 | -- | -- | -- | -- | 33,5 |
| **7** | **3** | 3 | 2,996 | 446 | 79 | 80 | 92 | 37,6 |
| **8** | **4** | 3 | 2,924 | 443 | | 82 | | 35,7 |
| **9** | **5** | 3 | 3,028 | 473 | | 77 | | 37,8 |
| **10** | **3** | 5 | 2,996 | 449 | 78 | 94 | 92 | |
| **11** | **5** | 1+3 - 1:2 | 3,0 | -- | -- | -- | -- | 34,8 |
| **12** | **5** | 1+3 - 1:1 | 3,0 | -- | -- | -- | -- | 34,1 |
| **V13** | **2** | 3 | 3,630 | -- | -- | 82 | -- | 30,4 |
| **14** | **1** | 3 | 3,310 | 408 | -- | 86 | -- | 38,9 |
| **V15** | **5** | 6 | 3,310 | 505 | -- | 83 | -- | 31,9 |
| **16** | **5** | 3+6 1:1 | 3,310 | 484 | -- | 81 | -- | 39,3 |
| **17** | **5** | 3+6 1:2 | 3,310 | 490 | -- | 78 | -- | 36,6 |
| **18** | **7** | 3 | 3,020 | 579 | -- | 83 | -- | 34,9 |
| **19** | **7** | 7 | 3,080 | 463 | -- | 90 | -- | 36,8 |
| **20** | **5** | 7 | 3,380 | 378 | -- | 84 | -- | 32,4 |

| | | | | | | | | |
|---|---|---|---|---|---|---|---|---|
| MV: Massenverhältnis GP_{(10°C)}: Gelpunkt bei 10°C GP_{(40°C)}: Gelpunkt bei 40°C T_{G}: Glasüberganstemperatur S_{D}: Shore D Härte | | | | | | | | |

## Patentansprüche

1. Mehrkomponenten-Epoxidharzzusammensetzung, umfassend
a) wenigstens eine Epoxidharzkomponente, die
a1) wenigstens ein Epoxidharz und
a2) wenigstens eine Verbindung der allgemeinen Formel I enthält, 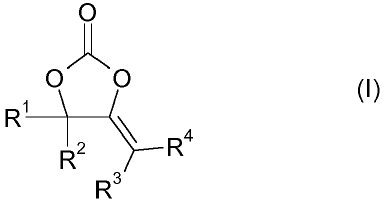 worin
R¹ und R² unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R¹ und R² gemeinsam für eine C₃-C₁₁-Alkylengruppe stehen;
R³ und R⁴ unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R³ und R⁴ gemeinsam für eine C₄-C₆-Alkylengruppe stehen;
b) wenigstens eine Härterkomponente, die
b1) wenigstens einen Aminhärter enthält,
wobei die Epoxidharzkomponente und/oder die Härterkomponente wenigstens einen weiteren Bestandteil c1) enthält, der unter aliphatischen Polyetherpolyolen und aliphatischen Polyetheraminpolyolen ausgewählt ist.

2. Epoxidharzzusammensetzung nach Anspruch 1, worin das aliphatische Polyetherpolyol Polytetrahydrofuran ist.

3. Epoxidharzzusammensetzung nach Anspruch 1, worin das aliphatische Polyetheraminpolyol ein verzweigtes Poly-C₂-C₄-alkylenetheraminpolyol ist.

4. Epoxidharzzusammensetzung nach einem der vorhergehenden Ansprüche, worin der Bestandteil c1) wenigstens ein aliphatisches Polyetheraminpolyol als Hauptbestandteil umfasst.

5. Epoxidharzzusammensetzung nach einem der vorhergehenden Ansprüche, worin in Formel I der Rest R¹ ausgewählt ist unter Wasserstoff und C₁-C₄-Alkyl, der Rest R² ausgewählt ist unter Wasserstoff und C₁-C₄-Alkyl und die Reste R³ oder R⁴ für Wasserstoff stehen.

6. Epoxidharzzusammensetzung nach einem der vorhergehenden Ansprüche, die wenigstens eines der folgenden Merkmale i. - v. aufweisen:
i. die Epoxidharzzusammensetzung enthält zusätzlich eine aliphatische, cycloaliphatische oder araliphatische Mono- oder Dihydroxyverbindung mit 6 bis 10 C-Atomen;
ii. der Anteil der Verbindungen der Formel I an der Epoxidharzkomponente liegt im Bereich von 1 bis 30 Gew.-%, bezogen auf das Gesamtgewicht der Epoxidharzkomponente;
iii. die Hauptmenge des weiteren Bestandteils c1) ist in der Härterkomponente b) enthalten;
iv. der weitere Bestandteil c1) macht 0,5 bis 20 Gew.-%, bezogen auf das Gesamtgewicht der Komponenten a) und b) in der Epoxidharzzusammensetzung, aus;
v. die Epoxidharzzusammensetzung ist in Form eines Kits, der wenigstens eine Epoxidharzkomponente a) und eine separate Härterkomponente b) umfasst.

7. Epoxidharzzusammensetzung nach einem der vorhergehenden Ansprüche, worin das Epoxidharz a1) wenigstens einen Polyglycidylether eines aromatischen Polyols umfasst.

8. Epoxidharzzusammensetzung nach Anspruch 7, worin der Polyglycidylether eines aromatischen Polyols ausgewählt ist unter den Polyglycidylethern von Bisphenol-A, Polyglycidylethern von Bisphenol-F und deren Gemischen.

9. Epoxidharzzusammensetzung nach Anspruch 7 oder 8, worin das Epoxidharz neben dem wenigstens einen Polyglycidylether eines aromatischen Polyols wenigstens einen Reaktivverdünner umfasst.

10. Epoxidharzzusammensetzung nach Anspruch 9, wobei der Reaktivverdünner ausgewählt ist unter Mono-, Di- und Triglycidylether aliphatischer oder cycloaliphatischer Mono-, Di- oder Trihydroxyverbindungen mit 2 bis 20 C-Atomen, und Diglycidylethern von Poly-C₂-C₄-alkylenethern.

11. Epoxidharzzusammensetzung nach einem der vorhergehenden Ansprüche, worin der Aminhärter b1) als Hauptbestandteil wenigstens eine aliphatische, cycloaliphatische oder araliphatische Verbindung mit 4 bis 20 C-Atomen umfasst, die 1, 2, 3 oder 4 primäre NH₂-Gruppen aufweist.

12. Epoxidharzzusammensetzung nach einem der vorhergehenden Ansprüche, worin der Aminhärter b1) als Hauptbestandteil meta-Xylylendiamin umfasst.

13. Verfahren zum Härten von Epoxidharzenzusammensetzungen gemäß einem der Ansprüche 1 bis 12, umfassend das Vermischen der Epoxidharzkomponente a) gemäß einem der Ansprüche 1 bis 10 mit einer Härterkomponente b) gemäß Anspruch 1 oder 11 oder 12.

14. Verwendung von Epoxidharzzusammensetzungen nach einem der Ansprüche 1 bis 12 in Mitteln zur chemischen Befestigung, in Injektionsmörteln, in Beschichtungsmitteln, in Gießmassen, zur Herstellung von Verbundwerkstoffen oder in Strukturklebstoffen.

15. Verfahren zur Verankerung von Gegenständen, umfassend das Einbringen eines Verankerungsmittels in eine Aussparung und Einbringen einer Mehrkomponenten-Epoxidharzzusammensetzung gemäß einem der Ansprüche 1 bis 12 in die Aussparung.

## Claims

1. A multicomponent epoxy resin composition comprising
a) at least one epoxy resin component which comprises
a1) at least one epoxy resin and
a2) at least one compound of the general formula (I), 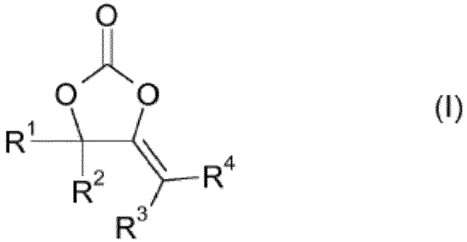 in which
R¹ and R² independently of one another are hydrogen, C₁-C₆ alkyl, C₁-C₄ alkoxy-C₁-C₄ alkyl, C₅-C₆ cycloalkyl, phenyl, phenyl-C₁-C₄ alkyl, C₂-C₆ alkenyl or C₂-C₆ alkynyl, or R¹ and R² together are a C₃-C₁₁ alkylene group;
R³ and R⁴ independently of one another are hydrogen, C₁-C₆ alkyl, C₁-C₄ alkoxy-C₁-C₄ alkyl, C₅-C₆ cycloalkyl, phenyl, phenyl-C₁-C₄ alkyl, C₂-C₆ alkenyl or C₂-C₆ alkynyl, or R³ and R⁴ together are a C₄-C₆ alkylene group;
b) at least one hardener component which comprises
b1) at least one amine hardener,
wherein the epoxy resin component and/or the hardener component comprises at least one further constituent c1) which is selected from aliphatic polyether polyols and aliphatic polyetheramine polyols.

2. The epoxy resin composition according to claim 1, in which the aliphatic polyether polyol is polytetrahydrofuran.

3. The epoxy resin composition according to claim 1, in which the aliphatic polyether polyol is a branched poly-C₂-C₄ alkylene etheramine polyol.

4. The epoxy resin composition according to any of the preceding claims, in which the constituent c1) comprises at least one aliphatic polyetheramine polyol as principal constituent.

5. The epoxy resin composition according to any of the preceding claims, in which in formula I the radical R¹ is selected from hydrogen and C₁-C₄ alkyl, the radical R² is selected from hydrogen and C₁-C₄ alkyl, and the radicals R³ or R⁴ are hydrogen.

6. The epoxy resin composition according to any of the preceding claims, having at least one of the following features i.-v.:
i. the epoxy resin composition further comprises an aliphatic, cycloaliphatic or araliphatic mono- or dihydroxy compound having 6 to 10 carbon atoms;
ii. the fraction of the compounds of the formula I in the epoxy resin component is in the range from 1 to 30 wt%, based on the total weight of the epoxy resin component;
iii. the major amount of the further constituent c1) is comprised in the hardener component b);
iv. the further constituent c1) accounts for 0.5 to 20 wt%, based on the total weight of components a) and b) in the epoxy resin composition;
v. the epoxy resin composition is in the form of a kit which comprises at least one epoxy resin component a) and a separate hardener component b) .

7. The epoxy resin composition according to any of the preceding claims, in which the epoxy resin a1) comprises at least one polyglycidyl ether of an aromatic polyol.

8. The epoxy resin composition according to claim 7, in which the polyglycidyl ether of an aromatic polyol is selected from the polyglycidyl ethers of bisphenol A, polyglycidyl ethers of bisphenol F, and mixtures thereof.

9. The epoxy resin composition according to claim 7 or 8, in which the epoxy resin, as well as the at least one polyglycidyl ether of an aromatic polyol, comprises at least one reactive diluent.

10. The epoxy resin composition according to claim 9, wherein the reactive diluent is selected from mono-, di- and triglycidyl ethers of aliphatic or cycloaliphatic mono-, di- or trihydroxy compounds having 2 to 20 carbon atoms, and diglycidyl ethers of poly-C₂-C₄ alkylene ethers.

11. The epoxy resin composition according to any of the preceding claims, in which the amine hardener b1) comprises as principal constituent at least one aliphatic, cycloaliphatic or araliphatic compound having 4 to 20 carbon atoms, which has 1, 2, 3 or 4 primary NH₂ groups.

12. The epoxy resin composition according to any of the preceding claims, in which the amine hardener b1) comprises as principal constituent meta-xylylenediamine.

13. A method for curing epoxy resin compositions according to any of claims 1 to 12, comprising the mixing of the epoxy resin component a) according to any of claims 1 to 10 with a hardener component b) according to claim 1 or 11 or 12.

14. The use of epoxy resin compositions according to any of claims 1 to 12 in agents for chemical fixing, in injection mortars, in coating materials, in casting compounds, for producing composite materials, or in structural adhesives.

15. A method for anchoring articles, comprising the introduction of an anchoring agent into a recess and introduction of a multicomponent epoxy resin composition according to any of claims 1 to 12 into the recess.

## Revendications

1. Composition de résine époxyde multicomposante, comprenant :
a) au moins un composant résine époxyde, qui contient
a1) au moins une résine époxyde et
a2) au moins un composé de formule générale I 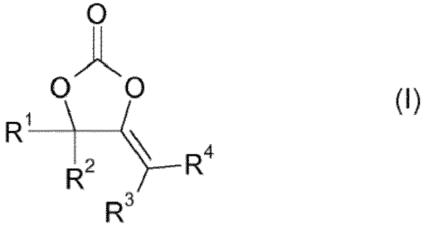 dans laquelle
R¹ et R² représentent indépendamment l'un de l'autre hydrogène, alkyle en C₁-C₆, alcoxy en C₁-C₄-alkyle en C₁-C₄, cycloalkyle en C₅-C₆, phényle, phényl-alkyle en C₁-C₄, alcényle en C₂-C₆ ou alcynyle en C₂-C₆, ou R¹ et R² représentent ensemble un groupe alkylène en C₃-C₁₁ ;
R³ et R⁴ représentent indépendamment l'un de l'autre hydrogène, alkyle en C₁-C₆, alcoxy en C₁-C₄-alkyle en C₁-C₄, cycloalkyle en C₅-C₆, phényle, phényl-alkyle en C₁-C₄, alcényle en C₂-C₆ ou alcynyle en C₂-C₆, ou R³ et R⁴ représentent ensemble un groupe alkylène en C₄-C₆ ;
b) au moins un composant durcisseur, qi contient
b1) au moins un durcisseur aminé,
le composant résine époxyde et/ou le composant durcisseur contenant au moins un constituant c1) supplémentaire, qui est choisi parmi les polyéther-polyols aliphatiques et les polyéther-amine-polyols aliphatiques.

2. Composition de résine époxyde selon la revendication 1, dans laquelle le polyéther-polyol aliphatique est le polytétrahydrofurane.

3. Composition de résine époxyde selon la revendication 1, dans laquelle le polyéther-amine-polyol aliphatique est un poly-alkylène en C₂-C₄-éther-amine-polyol ramifié.

4. Composition de résine époxyde selon l'une quelconque des revendications précédentes, dans laquelle le constituant c1) comprend au moins un polyéther-amine-polyol aliphatique en tant que constituant principal.

5. Composition de résine époxyde selon l'une quelconque des revendications précédentes, dans laquelle, dans la formule I, le radical R¹ est choisi parmi hydrogène et alkyle en C₁-C₄, le radical R² est choisi parmi hydrogène et alkyle en C₁-C₄, et les radicaux R³ ou R⁴ représentent hydrogène.

6. Composition de résine époxyde selon l'une quelconque des revendications précédentes, qui présente au moins une des caractéristiques i. à v. suivantes :
i. la composition de résine époxyde contient en outre un composé mono- ou dihydroxy aliphatique, cycloaliphatque ou araliphatique de 6 à 10 atomes C ;
ii. la proportion des composés de formule I par rapport au composant résine époxyde se situe dans la plage allant de 1 à 30 % en poids, par rapport au poids total du composant résine époxyde ;
iii. la totalité du constituant supplémentaire c1) est contenue dans le composant durcisseur b) ;
iv. le constituant supplémentaire c1) représente 0,5 à 20 % en poids, par rapport au poids total des composants a) et b) dans la composition de résine époxyde ;
v. la composition de résine époxyde est sous la forme d'un kit, qui comprend au moins un composant résine époxyde a) et un composant durcisseur b) séparé.

7. Composition de résine époxyde selon l'une quelconque des revendications précédentes, dans laquelle la résine époxyde a1) comprend au moins un éther polyglycidylique d'un polyol aromatique.

8. Composition de résine époxyde selon la revendication 7, dans laquelle l'éther polyglycidylique d'un polyol aromatique est choisi parmi les éthers polyglycidyliques de bisphénol A, les éthers polyglycidyliques de bisphénol F et leurs mélanges.

9. Composition de résine époxyde selon la revendication 7 ou 8, dans laquelle la résine époxyde comprend au moins un diluant réactif en plus dudit au moins un éther polyglycidylique d'un polyol aromatique.

10. Composition de résine époxyde selon la revendication 9, dans laquelle le diluant réactif est choisi parmi les éthers mono-, di- et triglycidyliques de composés mono-, di- ou trihydroxy aliphatiques ou cycloaliphatiques de 2 à 20 atomes C, et les éthers diglycidyliques de polyéthers d'alkylène en C₂-C₄.

11. Composition de résine époxyde selon l'une quelconque des revendications précédentes, dans laquelle le durcisseur aminé b1) comprend en tant que constituant principal au moins un composé aliphatique, cycloaliphatique ou araliphatique de 4 à 20 atomes C, qui comprend 1, 2, 3 ou 4 groupes NH₂ primaires.

12. Composition de résine époxyde selon l'une quelconque des revendications précédentes, dans laquelle le durcisseur aminé b1) comprend en tant que constituant principal la méta-xylylène-diamine.

13. Procédé de durcissement de compositions de résine époxyde selon l'une quelconque des revendications 1 à 12, comprenant le mélange du composant résine époxyde a) selon l'une quelconque des revendications 1 à 10 avec un composant durcisseur b) selon la revendication 1 ou 11 ou 12.

14. Utilisation de compositions de résine époxyde selon l'une quelconque des revendications 1 à 12 dans des agents pour la fixation chimique, dans des mortiers d'injection, dans des agents de revêtement, dans des masses à couler, pour la fabrication de matériaux composites ou dans des adhésifs structuraux.

15. Procédé d'ancrage d'objets, comprenant l'introduction d'un agent d'ancrage dans une cavité et l'introduction d'une composition de résine époxyde multicomposante selon l'une quelconque des revendications 1 à 12 dans la cavité.
